(19)

**Europäisches Patentamt**

**European Patent Office**

**Office européen des brevets**

(11) **EP 4 648 369 A1**

(12) **EUROPEAN PATENT APPLICATION**

(43) Date of publication:
**12.11.2025 Bulletin 2025/46**

(21) Application number: **25168029.4**

(22) Date of filing: **02.04.2025**

(51) International Patent Classification (IPC):
**H04L 27/26** (2006.01)   **H04J 11/00** (2006.01)
**H04L 5/00** (2006.01)

(52) Cooperative Patent Classification (CPC):
**H04L 27/2613; H04J 11/005; H04L 5/0048;**
**H04L 27/2607; H04L 27/26132;** H04L 5/0007

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **10.05.2024 US 202418660301**

(71) Applicant: **INTEL Corporation**
**Santa Clara, CA 95054 (US)**

(72) Inventors:
• **LU, Peng**
**Elk Grove, CA, 95757 (US)**
• **BHAGAT, Ashwini**
**San Diego, CA, 92131 (US)**
• **BEADLE, Michael**
**Tustin, CA, 92782 (US)**
• **HEWAVITHANA, Thushara**
**Chandler, 85249 (US)**
• **WONG, Samuel**
**San Diego, CA, 92129 (US)**
• **LEE, Daewon**
**Portland, OR, 97229 (US)**

(74) Representative: **Viering, Jentschura & Partner mbB**
**Patent- und Rechtsanwälte**
**Am Brauhaus 8**
**01099 Dresden (DE)**

(54) **METHODS AND DEVICES FOR DISAGGREGATED RADIO ACCESS NETWORKS**

(57)     An apparatus including: a memory, and a processor configured to: determine, for a remote interference management reference signal, a first frequency domain sequence comprising a plurality of first frequency domain symbols, wherein each first frequency domain symbol corresponds to a subcarrier of a plurality of subcarriers; determine a second frequency domain sequence comprising a plurality of second frequency domain symbols, wherein each second frequency domain symbol at a respective subcarrier comprises a phase rotated version of the respective first frequency symbol at the respective subcarrier, in which the respective first frequency symbol is phase rotated based on the respective subcarrier and a cyclic prefix length; and instruct to send information representing the second frequency domain sequence and the first frequency domain sequence to a radio unit of a cellular network for a transmission in consecutive orthogonal frequency division multiplex symbols.

FIG. 13

## Description

### Technical Field

This disclosure generally relates to methods and devices for disaggregated radio access networks.

### Background

In radio communication networks in accordance with many radio communication technologies, such as Fourth Generation (LTE) and Fifth Generation (5G) New Radio (NR), various methods are employed to provide wireless data transfer with desired efficiency, speed, and reliability. Traditional radio access networks (RANs) employed integrated systems in which the entire processing with respect to transmission and reception of radio communication signals was performed. In such traditional RANs, network access nodes may implement the whole network stack including physical layer (PHY), media access control (MAC), radio link control (RLC), and packet data convergence control (PDCP).

In various deployments in recently emerged RAN architectures, such as Open Radio Access Network (O-RAN) architectures, network access nodes may have functionalities that are split among multiple units with an intention to meet the demands of increased capacity requirements by providing a flexible and interoperable approach for RANs. There are many approaches to provide the split among the multiple units. In one example, a baseband unit (BBU) may be split into i) a Control Unit (CU) (e.g. O-CU) mainly responsible for non-real time operations hosting the radio resource control (RRC) and the control plane of the PDCP protocol and a ii) Distributed Unit (DU) (e.g. O-DU) mainly responsible for real-time operations hosting, for example, RLC layer functions, MAC layer functions, and Higher-PHY functions. Radio units (RUs) (e.g. O-RU) hosting the Lower-PHY functions may receive radio communication signals from terminal devices and provide data streams to the DU over a fronthaul interface (e.g. open fronthaul).

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIG. 1 shows an exemplary radio communication network;
FIG. 2 shows an exemplary internal configuration of a communication device;
FIG. 3 shows an illustrative example associated with a network access node;
FIG. 4 shows an example of a radio communication network;
FIG. 5 shows an illustrative example of a baseband processing entity and a radio unit;
FIG. 6 shows an illustrative example of a time domain representation of a RIM-RS;
FIG. 7 shows an example of an apparatus in accordance with aspects of this disclosure;
FIG. 8 shows an illustrative example of two consecutive OFDM symbols;
FIG. 9 shows an illustrative example of communication resources in time domain;
FIG. 10A shows an example illustrating an application of a phase ramp signal;
FIG. 10B shows an illustrative example for a phase reset during modulation and upconversion;
FIG. 11 shows an example of a procedure in accordance with aspects of this disclosure;
FIG. 12 shows an exemplary radio access network architecture in which the radio access network is disaggregated into multiple units;
FIG. 13 shows an example of a method.

### Description

The following detailed description refers to the accompanying drawings that show, by way of illustration, exemplary details and aspects in which aspects of the present disclosure may be practiced.

In conventional cellular systems like 2G/3G, the signal processing for each cell is restricted to fixed hardware resources such as BTS (Base Transceiver Station). In 3G/4G, a disaggregation of a single radio network access node has been introduced by including RRUs (Remote Radio Unit) and BBUs, which is followed by the O-RAN architecture for 4G/5G/6G, in which the disaggregation involves O-RUs, O-DUs, and O-CUs.

Furthermore, virtualized RAN (vRAN) concept has been introduced, which may also be considered to include aspects associated with the disaggregation and virtualization of various components of the conventional RAN. In the vRAN concept, various functions performed by hardware specific elements are virtualized and converted into software-based functionalities operable on standard hardware platforms. The previously introduced hardware components such as RRUs and BBUs have been separated into software-based entities. The vRAN concept further includes standardized and open interfaces for interoperability between different hardware platforms independent from vendor-specific implementations for a more open and flexible network ecosystem.

Remote Interference Management (RIM) in the context of cellular networks refers to the techniques and mechanisms employed to mitigate interference between neighboring cells. Interference occurs when signals transmitted from one cell (e.g. by a network access node or user equipments (UEs) of the cell) interfere with signals received in adjacent cells (e.g. by further network access nodes of adjacent/neighboring cells or UEs of the adjacent/neighboring cells), which can degrade the quality of communication and reduce network performance. RIM strategies may aim to minimize this interference to improve spectral efficiency, increase capacity, and enhance overall network performance.

Key aspects of the RIM in cellular networks may include interference estimation, interference coordination, beamforming and antenna techniques, dynamic spectrum management, and interference cancellation. Interference estimation may refer to aspects including UEs or network access nodes estimating interference levels by analyzing received signals, measuring channel conditions, and assessing the quality of received data. This estimation includes interference from neighboring UEs or cells operating in the same frequency band. Interference coordination may refer to aspects including UEs or network access nodes coordinating their transmission strategies to minimize interference with neighboring UEs or cells. This coordination may involve adjusting transmission power levels, selecting appropriate modulation and coding schemes, and implementing interference-aware scheduling algorithms. Beamforming and antenna techniques for RIM may refer to UEs or network access nodes utilizing beamforming and antenna techniques to focus transmission and reception beams towards intended communication partners while minimizing interference from other directions. Beamforming can be particularly effective in reducing interference in dense deployment scenarios. Dynamic spectrum management for RIM may refer to UEs or network access nodes dynamically managing the allocation of frequency resources to mitigate interference and optimize spectrum utilization, which may involve techniques such as dynamic frequency selection, spectrum sharing, and interference-aware resource allocation. Interference cancellation for RIM may refer to UEs or network access nodes employing interference cancellation techniques to mitigate the effects of interference on received signals. This could include spatial interference cancellation at the receiver or advanced signal processing algorithms to separate desired signals from interfering sources.

For the purpose of RIM, cellular networks (LTE, 5G/NR, 6G, etc.) may employ a designated reference signal that is used in cellular communication systems, particularly in the context of mitigating interference between neighboring cells, which is referred to as a RIM-reference signal (RIM-RS). Neighboring cells may utilize the RIM-RS to estimate and mitigate interference caused by transmissions from adjacent cells. Illustratively, a network access node may transmit RIM-RS to neighboring cells over designated resource blocks or subframes. The network infrastructure may manage the allocation of resources for RIM-RS transmission. By analyzing received RIM-RS signals, neighboring cells can infer channel conditions and interference levels, based on which radio network entities, such as further network access nodes or UEs of the neighboring cells, may adapt transmission parameters and interference mitigation techniques accordingly.

In accordance with various aspects described herein, signal attributes of an RIM-RS (e.g. time domain attributes, such as duration, cyclic prefix (CP) length, CP placement in view of designated resource grid configuration, etc.) to be transmitted by a BS may be different from attributes of other radio communication signals to be transmitted by the same BS, which some of such attributes may be described in this disclosure. In disaggregated radio network architectures including a radio unit providing lower layer (e.g. lower PHY) functions of the network stack and a baseband unit providing high layer (e.g. higher PHY) functions of the network stack, such differentiation may require a further signaling to be exchanged by the baseband unit to the radio unit, which might indicate the allocation and/or presence of RIM-RS in designated resource elements of the resource grid, so that the radio unit configures radio communication resources (time and frequency resources) properly to transmit the RIM-RS.

However, the above-mentioned approach may increase the network overhead and increase configuration complexity on the radio unit side, as that may require the radio unit to switch from a previous configuration for RF transmission for other signals (signals other than RIM-RS, e.g. uplink user data, other reference signals, etc.) into a particular configuration to transmit RIM-RS, and then to switch back to the previous configuration for further RF transmission for other signals. In particular, considering the development of O-RAN architecture including an O-DU as a portion of the baseband unit and the O-RU as the radio unit, the aspects provided in this disclosure may allow the RIM-RS waveform to be generated in a way that is fully compliant with O-RAN split between the O-DU and the O-RU addressing to the improvements described herein.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3 GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 4G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth®, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("I2V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 690-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 600 MHz bands, bands within the 24.25-86 GHz range, etc.), spectrum made available under FCC's "Spectrum Frontier" 4G initiative (including 27.5-28.35 GHz, 29.1-29.25 GHz, 31-31.3 GHz, 37-38.6 GHz, 38.6-40 GHz, 42-42.5 GHz, 47-64 GHz, 64-71 GHz, 61-76 GHz, 81-86 GHz and 92-94 GHz, etc.), the ITS (Intelligent Transport Systems) band of 4.9 GHz (typically 4.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 60.2 GHz-71 GHz band, any band between 65.88 GHz and 61 GHz, bands currently allocated to automotive radar applications such as 66-81 GHz, and future bands including 94-300 GHz and above. Furthermore, the apparatuses and methods described herein can also employ radio communication technologies on a secondary basis on bands such as the TV White Space bands (typically below 690 MHz) where e.g. the 400 MHz and 600 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

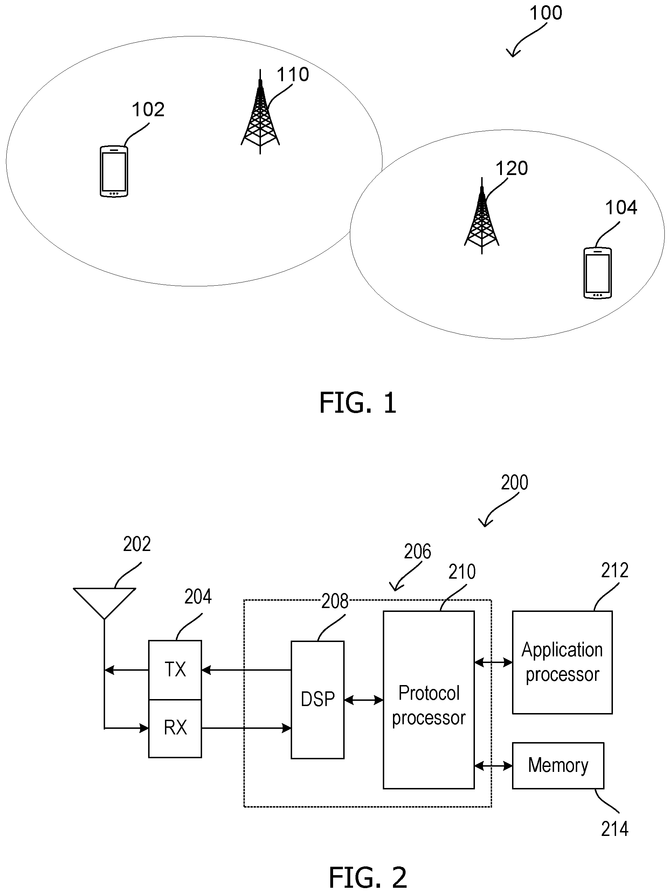

FIGs. 1 and 2 depict a general network and device architecture for wireless communications. In particular, FIG. 1 shows exemplary radio communication network 100 (e.g. a cellular communication network) according to some aspects, which may include terminal devices 102 and 104 and network access nodes 110 and 120. Radio communication network 100 may communicate with terminal devices 102 and 104 (i.e. mobile radio communication devices) via network access nodes 110 and 120 (i.e. radio communication devices) over a radio access network. Although certain examples described herein may refer to a particular radio access network context (e.g., LTE, UMTS, GSM, other 3rd Generation Partnership Project (3GPP) networks, WLAN/WiFi, Bluetooth, 4G NR, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include LTE, UMTS, GSM, 5G/NR, 6G, WiMAX, Bluetooth, WiFi, mmWave, etc., any of which may be applicable to radio communication network 100.

In various aspects, network access nodes 110 and 120 may include one or more CUs, one or more DUs, and one or more RUs to communicate with terminal devices 102 and 104. In various examples, an RU may include a device configured to implement various processing functions for RF. In particular the RU may implement functions of a lower PHY. A DU may include a device configured to implement various processing functions, in particular including functions of a higher PHY, MAC, and RLC. The skilled person may realize that this is one example of a split of the network stack and DUs and RUs may have different split configurations. The RU may be linked to terminal devices 102 and 104 over a radio connection, and to the DU over a fronthaul interface.

In various examples, the fronthaul interface may be according to a Common Public Radio Interface (CPRI) or an Enhanced Common Public Radio Interface (eCPRI) configured to communicate over a connection via fiber optic cables, but there are also other communication mediums that may handle the fronthaul communication. In any event, the RUs may be serving a plurality of terminal devices, and there may be limitations in terms of link capacity and bandwidth with respect to the communication between the RUs and a corresponding DU over the fronthaul. It may desirable to address some of the fronthaul limitations.

FIG. 2 shows an exemplary internal configuration of a communication device according to various aspects provided in this disclosure. The communication device may include various aspects of communication devices (e.g. network access nodes 110, 120, BBUs, CUs, DUs or RUs, noting that some of the components described herein may differ) or various aspects of mobile radio communication devices (e.g. terminal device 102, 104) described in this disclosure. The communication device 200 may include a communication interface that may optionally include an antenna system 202 and a radio frequency (RF) transceiver 204, a baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over a communication interface. The communication interface, for a radio communication device, may include antenna system 202 and RF transceiver 204 to transmit and receive radio signals according to the formatting and scheduling parameters defined by each communication protocol. The skilled person may recognize that the communication device 200 may include another communication interface to perform communication with other communication devices within the communication network. Although various practical designs may include separate communication components for each supported communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU, and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

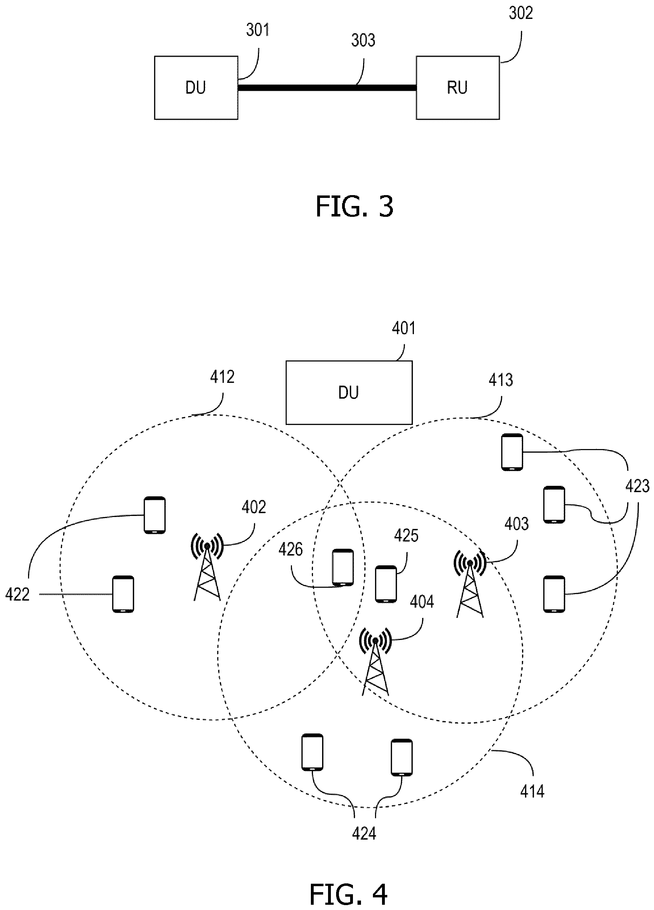

FIG. 3 shows an illustrative example associated with a network access node. The illustration shows a network access node system including a DU 301 and an RU 302. A fronthaul 303 connects the DU 301 and the RU 302. An interface, such as CPRI or eCPRI may be used with as a fronthaul interface. As provided in this disclosure, the DU 301 may implement various functions for PDCP, RLC, MAC, and PHY layer, and the RU 302 may implement various functions for the PHY layer and RF functions to receive and transmit radio communication signals to terminal devices (i.e. UEs) that are communicatively coupled to the RU 302. The term "communicatively coupled to" may also be referred to as "attached to" or "serve". The illustration shows that there is only one RU 302 is communicatively coupled to the DU 301, but the skilled person would appreciate that the DU 301 may be communicatively coupled to a plurality of RUs.

Illustratively, in particular according to O-RAN context, the DU 301, when combined with the RU 302 connected to it, may provide functions of a gNB-DU as defined by 3GPP TS 38.401. Noting that the DU 301 may be a virtual (i.e. logical) entity, or a physical entity, the DU 301 may terminate the E2 and the F1 interface, and the Open Fronthaul interface as well as the RLC, MAC and High-PHY functions of the radio interface towards the UE.

The DU 301 may perform various functions in the PHY layer that may be different from the PHY layer functions that the RU 302 performs. The DU 301 may be deployed close to the RU 302 on site on a commercial off-the-shelf (COTS) server and communicate with the RU 302 over the fronthaul 303. For example, in a system configuration with a 7-2 functional split, the DU 301 may perform higher PHY layer functions including precoding on antenna ports, layer mapping, modulation, scrambling, rate matching, coding and block segmentation, cyclic redundancy check (CRC) functions and the RU 302 may perform lower PHY layer functions including cyclic prefix (CP) functions, Fast Fourier Transform (FFT) functions, beamforming and port expansion functions, resource element mapping functions. The RU 302 may also perform RF functions. In various examples, the DU 301 and the RU 302 may be configured to operate with various functional split configurations, in particular different configurations for downlink and uplink.

Accordingly, the RU 302 may include a transceiver configured to receive and transmit radio communication signal to a plurality of terminal devices that the RU 302 may serve (e.g. UEs). The RU 302 may include or may be coupled to a plurality of antennas (e.g. an antenna array) to receive and transmit radio communication signals to the terminal devices. The RU 302 may perform beamforming operations (e.g. by applying beamforming weights) to communicate with the terminal devices. In various examples, the RU 302 may receive radio communication signals from the terminal devices and obtain baseband signals based on the received radio communication signals in the uplink. The RU 302 may further obtain radio communication signals from baseband signals and transmit radio communication signals to the terminal devices in the downlink.

The RU 302 may further include a processor configured to perform various processing functions, in particular with respect to the defined network stack functions for the RU 302. As provided for this illustrative example, the processor of the RU 302 may implement lower-PHY functions including the functions as provided for the illustrative example. Furthermore, the processor of the RU 302 may include a controller to perform various aspects as provided in this disclosure. The RU 302 may further include a memory to store data.

The transceiver of the RU 302 may further perform operations to communicate with the DU 301. The transceiver of the RU 302 may include circuits to receive and transmit communication signals from/to the DU 301 over the fronthaul 303. Accordingly, the processor of the RU 302 may control a fronthaul interface and transmit communication signals based on the received radio communication signals after the RU 302 performs the defined lower-PHY functions to the DU 301 over the fronthaul 303, so that the DU 301 may further process the communication signals that the RU 302 provides according to various functions designated for the DU 301. Similarly, the DU 301 may perform various processing functions designated for the DU 301 and transmit communication signals to be transmitted to the terminal devices to the RU 302 over the fronthaul 303, and the RU 302 may perform defined lower-PHY functions and also RF functions for the communication signals in order to transmit radio communication signals to the terminal devices.

The DU 301 may include a transceiver configured to receive and transmit communication signals from/to the RU 302 over the fronthaul 303. Furthermore, the transceiver of the DU 301 may transmit and receive signals from a control unit (not shown) that performs various functions of the network stack over a backhaul or a midhaul. In various examples, a combined unit (e.g. a BBU) may include the DU 301, so that the RU 302 may be communicatively coupled to the BBU over a fronthaul.

The DU may include a processor configured to perform various processing functions, in particular with respect to the defined network stack functions for the DU 301. As provided for this illustrative example, the processor of the DU 301 may implement RLC layer functions, MAC layer functions, and higher-PHY functions including the functions as provided for this illustrative example. Furthermore, the processor of the DU 301 may include a controller to perform various aspects as provided in this disclosure. The DU 301 may further include a memory store data.

In accordance with various aspects described herein, the illustrated connection, via the fronthaul 303, may facilitate bidirectional data transfer between the DU 301 providing handling of higher network stack functionalities, and the RU 302 focusing on lower PHY layer operations. Illustratively, the RU 302 may perform primary functions, such as cyclic prefix (CP), FFT, beamforming and RF, including processing baseband signals and radio communication signals received from terminal devices and the DU 301 may manage more complex tasks such as PDCP, RLC, MAC, and higher-layer PHY functions.

Further, the RU 302 may contribute by performing in-line beamforming operations, i.e. applying beamforming weights to facilitate communication with terminal devices. Inherently, such operations may require a collaboration as the RU 302 performs beamforming from signals received from the DU 301 to obtain beamformed communication signals to be transmitted to terminal devices.

FIG. 4 shows an example of a radio communication network. The radio communication network may include a DU 401 that is communicatively coupled to a plurality of RUs, such that each RU of the plurality of RUs coupled to the DU 401 over a fronthaul (not shown), including a first RU 402, a second RU 403, and a third RU 404. Each RU may be located at different locations in order to provide service to different cell sectors, in a manner that each RU may provide service for UEs for a sector that may or may not overlap with another cell sector of another RU. In this example, the first RU 402 is configured to provide service for UEs in a first sector 412, a second RU 403 is configured to provide service for UEs in a second sector 413, and a third RU is configured to provide service for UEs in a third sector 414, and the cell sectors may overlap at certain locations. In various examples, each RU may be configured to provide services for substantially the same coverage area to multiple UEs, in which each of the UEs may be served by more than one RU for joint processing.

Accordingly, each RU may be serving a plurality of UEs within the respective sector of the RU to receive and transmit radio communication signals from/to UEs. In this illustrative example, the first RU 402 is configured to provide services for a first group of UEs including UEs 422 and the UE 426, and it may be referred to as the first group of UEs 422 are served by the first RU 402. The term served for this aspect may refer to a case of an existent radio connection between entities, or a case where UEs receive services at least for a function of a layer of an interconnection model with respect to the network stack. This may include a case where the first RU 402 serves to the first group of UEs 422, such as the first RU 402 may be a serving cell for the first group of UEs, and it may be referred to as the first group of UEs 422 are being served by the first RU 402, and such. Illustratively, each UE 422 is associated with the first RU 402 and is associated with the DU 401 as a RU-DU pair, which may also be referred to as a network unit pair in this disclosure.

In this context, each of the UE 423 is associated with the second RU 403, and is associated with the DU 401, as a corresponding RU-DU pair. Similarly, each of the UEs 424 is associated with the third RU 404, and is associated with the DU 401, as corresponding RU-DU pair.

As indicated, there may be cases in which there are overlap at certain locations. For this aspect, one of the UEs, i.e. the UE 425 is depicted in such a manner, the UE 425 may be located to receive services in the second cell sector 413 and in the third cell sector 414. In other words, the UE 425 is associated with the second RU 403 and the third RU 404, and is associated with the DU 401. So, the UE 425 is associated with a first RU-DU pair that is the second RU 403 and the DU 401; and is associated with a second RU-DU pair that is the third RU 404 and the DU 401.

Similarly, the UE 426 is depicted to receive services from each of the first RU 402, the second RU 403, and the third RU 404, and hence served by all RUs 402, 403, 404. In other words, the UE 426 is associated with the first RU 402, the second RU 403 and the third RU 404, and is associated with the DU 401. So, the UE 426 is associated with a first RU-DU pair that is the first RU 402 and the DU 401, a second RU-DU pair that is the second RU 403 and the DU 401; and is associated with a third RU-DU pair that is the third RU 404 and the DU 401.

Accordingly, each UE 422, 423, 424, 425 may transmit and receive radio communication signals from/to the corresponding RU 402, 403, 404 that the respective UE 422, 423, 424, 425 is being served. In such a constellation, especially based on the locations of the RUs, each RU may encounter interferences with respect to radio communication activities between other RUs and the corresponding group of UEs. For example, the radio communication between each RU 402, 403, 404, and corresponding groups of UEs as provided in this illustrative example, may be subjected to interference based on radio communication signals exchanged between each of the other RUs 402, 403, 404 and corresponding group of UEs for each of the other RUs 403, 404.

For example, the radio communication between the first RU 402 and the first group of UEs may be subject to interference from radio communication signals exchanged between the second RU 403 and the second group of UEs and between the third RU 404 and the third group of UEs. Accordingly, with respect to the first RU 402, the radio communication between the second RU 403 and the second group of UEs, and the radio communication between the third RU 404 and the third group of UEs may be referred to as interfering radio communication in this example. Similarly, for the first RU 402, other RUs, such as the second RU 403 and the third RU 404 may be referred to as interfering RUs, and the first group of UEs and the second group of UEs may be referred to as interfering UEs (e.g. interfering UEs) in this disclosure. In this illustrative example, as the UE 425 that is served by both of the second RU 403 and the third RU 404, neither interfering UEs for the second RU 403 nor the third RU 404 may include the UE 425, as the UE 425 is being served by the second RU 403 and the third RU 404. In various examples, RUs may receive information indicating further relationship between UEs and other RUs from the corresponding UE that the RU is serving, or from a DU that the RU is communicatively coupled to.

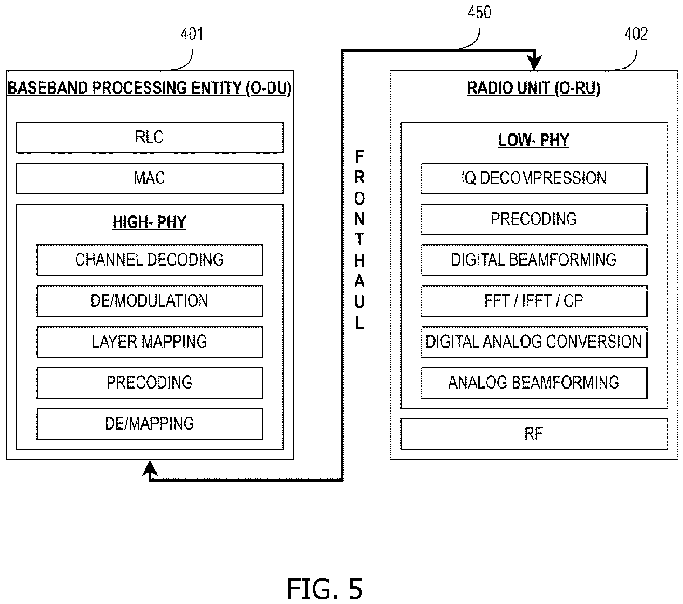

FIG. 5 shows an illustrative example of a baseband processing entity and a radio unit, as exemplary illustrated as RU (e.g. O-RU) 402 and a DU (e.g. O-DU) 401 respectively, together with various functions associated with each entity in accordance with a designated split at the network stack to separate PHY functions of the protocol stack into a LOW-PHY and a HIGH-PHY. In this illustration, the RU 401 may perform RF functions to receive and transmit radio communication signals from UEs, and LOW-PHY functions including analog beamforming, digital to analog or analog to digital conversion, FFT/IFFT and cyclic prefix functions, digital beamforming, precoding, and IQ decompression.

The DU 401 may be coupled to the RU 402 via the fronthaul 450. The DU 401 may perform further PHY functions, as HIGH-PHY functions including remapping, precoding, layer mapping, symbol modulation, and scrambling. The DU may further implement MAC and RLC operations. In some examples, a CU may be communicatively coupled to the DU 401 to perform further network operations above RLC layer, such as RRC, PDCP, SDAP, etc. In some examples, the DU may perform these operations.

In accordance with various aspects described herein, a BBU (e.g. the DU 401) may determine (e.g. encode and/or generate) frequency domain symbols with respect to OFDM symbols to be transmitted by a RU (the RU 402). The DU 401 may further map the generated frequency domain symbols into resource elements in time and frequency (and if available in spatial) domain (e.g. OFDM symbols, subcarriers, and antenna port respectively) in accordance with its allocation/scheduling operations. The DU 401 may provide information representing the frequency domain symbols and allocation/scheduling (i.e. resource elements allocated with respect to the frequency domain symbols) to the RU 401 through the fronthaul interface 450. The RU 402 handles the conversion from frequency domain symbols into time domain samples and cyclic prefix insertion.

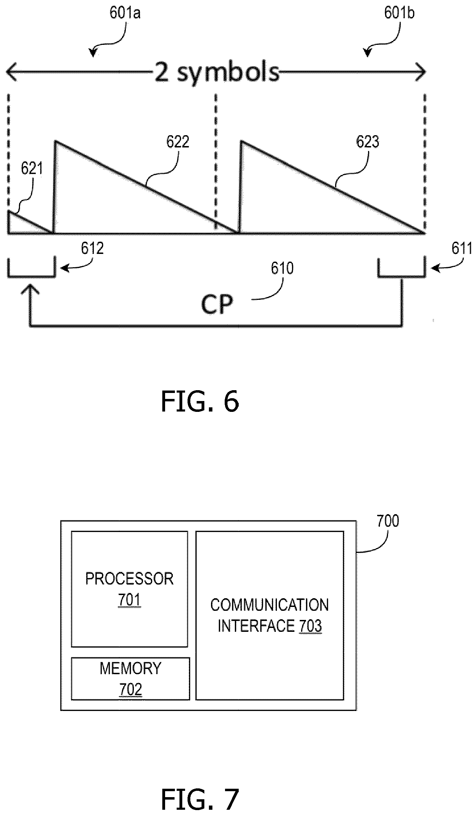

FIG. 6 shows an illustrative example of a time domain representation of a RIM-RS, depicting the time-domain waveform structure of a RIM-RS. The RIM-RS may span, in time domain, two OFDM symbols, namely as a first symbol 601a and a second symbol 601b. Through the generation of the RIM-RS, the RIM-RS may include a prefix section 621 including a cyclic prefix 610, followed by a first section 622 and a second section 623 that are identical. The cyclic prefix 610 of an RIM-RS may be based on last N symbols 611 of the second section 623. Correspondingly, the prefix section 621 may be based on the corresponding portion 611 of the second section 623 in this illustration. Noting the RIM-RS spanning the duration of two OFDM symbols in which one CP is provided for the duration of two OFDM symbols, the configuration of the radio access network may include a configuration, such that each OFDM slot includes a CP with a designated CP length that is based on configured numerology parameter affecting the subcarrier spacing, symbol duration, CP length, and frame and slot structure.

In other words, different from regular OFDM symbols used for communication, where a cyclic prefix is pre-appended to the front of the each OFDM symbol, the RIM-RS may include a special cyclic prefix followed by two RIM-RS IDFT periods that correspond to generated frequency domain symbols for the RIM-RS. Each RIM-RS IDFT period is formed by performing inverse discrete Fourier transform (IDFT) of a vector of frequency-domain symbols, including the frequency-domain RIM-RS sequence. The duration of a RIM-RS IDFT period may be the same as the IDFT period of regular OFDM symbols. The duration of the cyclic prefix of the RIM-RS may be equal to the duration of the two OFDM symbols covered by the RIM-RS, subtracting the durations of the two RIM-RS IDFT periods. RIM-RS IDFT period may refer to the period of time of a transmit RF signal in which the frequency-domain RIM-RS symbols of a frequency-domain RIM-RS sequence are transformed into time-domain symbols through the inverse discrete Fourier transform operation within.

Traditionally, the time-continuous signal $s_l^{(p,\mu)}(t)$ on antenna port $p$ for RIM-RS may be defined by:

$$s_l^{(p,\mu)}(t) = \sum_{k=0}^{L_{\mathrm{RIM}}-1} a_k^{(p,\mathrm{RIM})} \, e^{j2\pi(k+k_1)\Delta f_{\mathrm{RIM}}\left(t-N_{\mathrm{CP}}^{\mathrm{RIM}}T_{\mathrm{c}}-t_{\mathrm{start},l_0}^{\mu}\right)}$$

where:

$$t_{\mathrm{start},l_0}^{\mathrm{RIM}} \le t < t_{\mathrm{start},l_0}^{\mathrm{RIM}} + \left(N_{\mathrm{u}}^{\mathrm{RIM}} + N_{\mathrm{CP}}^{\mathrm{RIM}}\right)T_{\mathrm{c}}; \; N_{\mathrm{u}}^{\mathrm{RIM}} = 2 \cdot 2048\kappa \cdot 2^{-\mu};$$

$$N_{\mathrm{CP}}^{\mathrm{RIM}} = N_{\mathrm{CP},l_0}^{\mathrm{RIM}} + N_{\mathrm{CP},\bar{l}}^{\mathrm{RIM}}; \; \bar{l} = \begin{cases} 0 & \text{if } l_0 = N_{\mathrm{symb}}^{\mathrm{slot}} - 1 \\ l_0 + 1 & \text{otherwise} \end{cases}$$

; and $\Delta f_{\mathrm{RIM}} = 15 \cdot 2^{\mu}$ kHz where $\mu \in \{0,1\}$ is the subcarrier spacing configuration for the RIM-RS; $k_1$ is the starting frequency offset of the RIM-RS as given by clause 7.4.1.6.4.3; $L_{\mathrm{RIM}} = 12N_{\mathrm{RB}}^{\mathrm{RIM}}$ is the length of the RIM-RS sequence where $N_{\mathrm{RB}}^{\mathrm{RIM}}$ is the bandwidth of the RIM-RS in resource blocks; the starting position $l_0$ for RIM-RS type $i \in \{1,2\}$ in slot $n_{\mathrm{s,f}}^{\mu}$ in a frame is given by $l_0 = T_{\mathrm{offset}}^{\mathrm{UD,RIM}} \bmod N_{\mathrm{symb}}^{\mathrm{slot}}$; the starting position of OFDM symbol $l$ for subcarrier spacing configuration $\mu$ in a subframe is given by the following, wherein with $l = l_0$;

$$t_{\mathrm{start},l}^{\mu} = \begin{cases} 0 & l = 0 \\ t_{\mathrm{start},l-1}^{\mu} + T_{\mathrm{symb},l-1}^{\mu} & \text{otherwise} \end{cases}; \; N_{\mathrm{CP},l_0}^{\mathrm{RIM}} = N_{\mathrm{CP},l}^{\mu}$$

with $l = l_0$; $\kappa$ being the ratio between basic time unit for LTE $T_s$ and basic time unit for NR $T_c$; $N_{\mathrm{symb}}^{\mathrm{slot}}$ being Number of symbols per slot.

FIG. 7 shows an example of an apparatus for a communication device according to various examples in this disclosure. The apparatus 700 may be a communication device (e.g. the communication device 200) described in accordance with the aspects described herein. In particular, the apparatus 700 may include a BBU. In other words, the apparatus 700 may be configured to operate as a BBU within a radio access network, which is configured to provide at least higher PHY functions of the network stack within the radio access network. In particular, the apparatus 700 may be an O-DU (i.e. configured to provide O-DU functions according to the O-RAN architecture).

The device 700 may include a processor 701, a memory 702, and a communication interface 703 configured to receive and transmit communication signals in order to communicate with further entities within the cellular network including the radio access network. In some aspects, the communication interface 703 may include one or more signal paths to carry communication signals. The communication interface 703 may include one or more transceivers.

The processor 701 may include one or more processors, which may include a baseband processor and an application processor (e.g. application processor 212, baseband modem 206). In various examples, the processor 701 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 701 may be implemented in one processing unit, e.g. a system on chip (SOC), or a processor. In accordance with various examples, the processor 701 may further provide further functions to process received communication signals. The memory 702 may store various types of information required for the processor 701, or the communication interface 703 to operate in accordance with various aspects of this disclosure.

The communication interface 703 may include a RU interface 703R configured to communicate with multiple RUs (e.g. the RUs 610a-d). For example, the RU interface 703R may include a corresponding port dedicated for each RU of the multiple RUs that receives and sends communication signals to the respective RU. The corresponding port may couple the device 700 to the corresponding RU of the multiple RUs via the corresponding fronthaul interface. Similarly, the communication interface 703 may include a CU interface configured to communicate with at least one CU. The communication interface 703 may be configured to provide communication with any entities in accordance with the O-RAN architecture as described herein.

The processor 701 may be configured to perform operations to cause the BBU to perform any one of the operations described herein, in particular in accordance with FIGs. 3 and 4, involving performing operations of the network stack, in particular to perform PDCP, RLC, MAC, and higher-layer PHY functions described for the DUs 301, 401. Among such functions, the processor 701 may, in transmit direction, determine frequency domain symbols for downlink signals to be sent by one or more RUs communicatively coupled to the BBU to UEs served by the one or more RUs. For this purpose, the processor 701 may perform higher PHY processing as described in accordance with FIG. 5. The processor 701 may accordingly cause (e.g. instruct) the BBU (e.g. cause the communication interface 703) to send communication signals including determined frequency domain signals to an RU, so that the RU may perform lower PHY processing on the communication signals to transmit corresponding RF signals. The lower PHY processing may include a transformation from frequency domain into time domain (e.g. IFFT, inverse fast Fourier transform) to obtain the corresponding RF signals. The lower PHY processing may further include a CP insertion, in which a CP is inserted within each OFDM symbol.

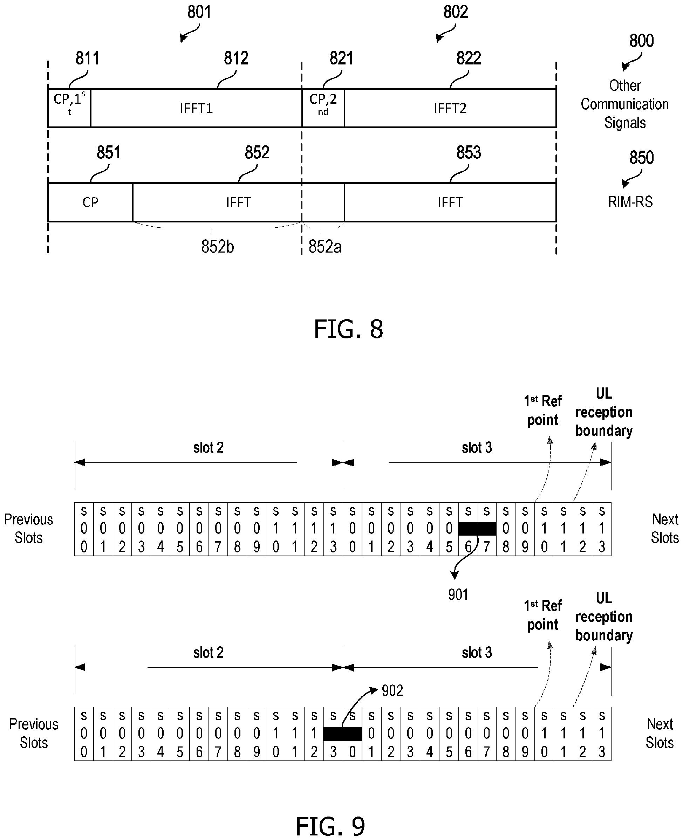

FIG. 8 shows an illustrative example of two consecutive OFDM symbols that an RU is configured to transmit, which is provided as a first OFDM symbol 801 and a second OFDM symbol 802. The first and second OFDM symbols may be consecutive symbols following each other (e.g. the second OFDM symbol 802 follows the first OFDM symbol 801 in time domain (i.e. the first OFDM symbol 801 is transmitted before the second OFDM symbol 802). As described herein, the RU, connected to the BBU including the apparatus 700, may be configured to perform the lower PHY processing in a designated configuration, such that the RU inserts a CP for each OFDM symbol. This is illustrated in FIG. 8 as other communication signals. FIG. 8 illustrates a representation of the OFDM symbols which the RU transmits, in time domain.

In other communication signals 800 (i.e. any one of communication signals except the RIM-RS 850), the processor 701 may obtain (e.g. determine, generate, encode) frequency domain symbols. The processor 701 may further map the obtained frequency domain symbols to certain (e.g. determined) resource elements within the resource grid for the transmission of RF signals that are based on (i.e. including) the obtained frequency domain symbols. The processor 701 may further perform other higher PHY functions on the obtained frequency domain symbols and cause the BBU to send communication signals representing the obtained frequency symbols to the RU.

Illustratively, the processor 701 may obtain first frequency domain symbols associated with the first OFDM symbol 801 and cause the communication interface 703 to send the first frequency domain symbols to the RU. A processor of the RU may receive the first frequency domain symbols and perform lower PHY functions on the first frequency domain symbols. The lower PHY functions may include performing an IFFT to the first frequency domain symbols to obtain IFFT1 812 depicted herein. The lower PHY functions may further include a CP insertion of a certain CP length (e.g. a time duration), in which the processor of the RU may copy an end portion of the IFFT 812, the end portion corresponding to the CP length, and add the end portion of the IFFT 812, as a first CP 811, at the beginning of the first OFDM symbol 801.

Similarly, the processor 701 may obtain second frequency domain symbols associated with the second OFDM symbol 802 and cause the communication interface 703 to send the second frequency domain symbols to the RU. The processor of the RU may receive the second frequency domain symbols and perform lower PHY functions on the second frequency domain symbols. The lower PHY functions may include performing an IFFT to the second frequency domain symbols to obtain IFFT2 822 depicted herein. The lower PHY functions may further include the CP insertion of the certain CP length (e.g. a time duration), in which the processor of the RU may copy an end portion of the IFFT 822, the end portion corresponding to the CP length, and add the end portion of the IFFT 822, as a second CP 821, at the beginning of the second OFDM symbol 802.

However, as illustrated herein, the configuration of the RIM-RS 850 may be different from the configuration provided for the other communication signals 800. In particular, the RIM-RS 850 may include a CP 851 with a CP length that is twice the duration of the first CP 811 and the second CP 821. The CP 851 may be followed by an IFFT of two sets of identical frequency domain symbols generated by the processor 701. In other words, the RIM-RS 850 may include the CP 851 that is followed by a first IFFT 852 of a determined (e.g. generated) RIM-RS frequency domain sequence that is followed by a second IFFT 853 of the determined RIM-RS frequency domain sequence, in which the first IFFT 852 and the second IFFT 853 are identical.

In accordance with various aspects described herein, the processor 701 may perform a pre-processing to a generated RIM-RS frequency domain sequence and send preprocessed frequency domain symbols to the RU, so that when the RU applies the lower PHY processing in accordance with the other communication signals as described above (i.e. an IFFT is applied and a corresponding CP is inserted within each OFDM symbol), obtained two consecutive OFDM symbols includes the CP 851, the first IFFT 852, and the second IFFT 853, as described in accordance with FIG. 8.

The processor 701 may generate a RIM-RS frequency domain sequence in accordance with a method designated for the cellular network. For this purpose, the processor 701 may determine (i.e. generate), for a RIM-RS 850, a first frequency domain sequence including a plurality of first frequency domain symbols, wherein each first frequency domain symbol of the plurality of first frequency domain symbols corresponds to a subcarrier of a plurality of subcarriers. The plurality of subcarriers may correspond to resource elements (in frequency domain) in which the RIM-RS 850 is allocated to be transmitted.

Traditionally, the RIM-RS 850 can be used by a network access node (e.g. a gNB) to measure inter-cell interference and to provide information about the experienced interference to other gNBs. Illustratively, the processor 701 may generate the RIM-RS with a reference sequence
$$r(m) = \frac{1}{\sqrt{2}}\big(1 - 2c(2m)\big) + j\frac{1}{\sqrt{2}}\big(1 - 2c(2m + 1)\big)$$
,
where the pseudo-random sequence $c(m)$. The pseudo-random sequence associated with the output sequence $c(n)$ of length $M_{PN}$, where $n = 0,1,...,M_{PN} - 1$, is defined by:

$$c(n) = \big(x_1(n + N_c) + x_2(n + N_c)\big) \bmod 2$$

$$x_1(n + 31) = \big(x_1(n + 3) + x_1(n)\big) \bmod 2$$

$$x_2(n + 31) = \big(x_2(n + 3) + x_2(n + 2) + x_2(n + 1) + x_2(n)\big) \bmod 2$$

where $N_C = 1600$ and the first m-sequence $x_1(n)$ may be initialized with $x_1(0) = 1$, $x_1(n) = 0$, $n = 1,2,...,30$. The initialization of the second m-sequence, $x_2(n)$, may be denoted by $c_{\text{init}} = \sum_{i=0}^{30} x_2(i) \cdot 2^i$ with the value depending on the application of the sequence. In this constellation, the processor 701 may initialize the pseudo-random sequence generator with: $c_{\text{init}} = (2^{10} f(n_t^{\text{RIM}}) + n_{\text{SCID}}) \bmod 2^{31}$, where: $n_{\text{SCID}} \in \{0,1, ... , 2^{10} - 1\}$; $f(n_t^{\text{RIM}}) = \sum_{i=0}^{20} 2^i \bar{c}(i)$ where the pseudo-random sequence $\bar{c}(i)$, initialized with $\bar{c}_{\text{init}}(i) = (\gamma n_t^{\text{RIM}} + \delta) \bmod 2^{31}$ where the multiplier factor $\gamma \in \{0,1, ..., 2^{31} - 1\}$ and the offset $\delta \in \{0,1, ..., 2^{31} - 1\}$; $n_t^{\text{RIM}} = \lfloor (t_{\text{RS}}^{\text{RIM}} - t_{\text{ref}}^{\text{RIM}})/T_{\text{per}}^{\text{RIM}} \rfloor$ is the number of RIM-RS transmission periods since $t_{\text{ref}}^{\text{RIM}}$ where $t_{\text{RS}}^{\text{RIM}} - t_{\text{ref}}^{\text{RIM}}$ is the time in seconds relative to $t_{\text{ref}}^{\text{RIM}}$ of 00:00:00 on 1 January 1900, calculated as continuous time without leap second and traceable to a common time reference, and $T_{\text{per}}^{\text{RIM}} = N_{\text{slot}}^{Pt}/(1000 \cdot 2^{\mu})$ is the RIM-RS transmission periodicity in seconds assuming that the first RIM-RS transmission period starts at $t_{\text{ref}}^{\text{RIM}}$, and where $N_{\text{slot}}^{Pt}$; $N_{slot}^{Pt} = 2^{\mu} P_t T_{per,1}^{RIM}$ *is the total number of slots in a RIM - RS transmission period.*

The processor 701 may map the determined frequency domain sequence to resource elements configured for transmission of the RIM-RS 850. In particular, the processor 701 may map the determined frequency domain sequence (i.e. the first frequency domain sequence) for a transmission into the second OFDM symbol 802 in corresponding frequency resources.

Attention is to be given to the RIM-RS 850 to be transmitted by the RU. The RIM-RS 850 may include identical IFFT portions (i.e. the first IFFT 852 and the second IFFT 853). Normally, if the RIM-RS 850 is compared to other communication signals 800, the portion depicted as 852a within the boundaries of the second OFDM symbol 802 is the portion that the RU inserts through the CP insertion operation. Noting the presence of the identical IFFT portions and the CP insertion operation in which the end portion of a CP length of the second IFFT 853 is inserted as the CP (e.g. the second CP 821), the processor 701 may map the frequency domain symbols to resource elements of the second OFDM symbol 802 without any change. Through the CP insertion at the RU side, the RU would insert the portion 852a as the CP of the second OFDM symbol 802, which would actually correspond to the end portion of the first FFT 852 as illustrated herein. Correspondingly, the processor 701 may cause the BBU to send information including the determined frequency domain sequence (i.e. the first frequency domain symbols) to the RU, in which the first frequency domain symbols are to be transmitted within the second OFDM symbol 802. The processor 701 may further cause the BBU to send information representing resource elements (e.g. an identifier of the second OFDM symbol 802 and corresponding frequency/spatial resources) to which the first frequency domain symbols are mapped.

In order to obtain frequency domain symbols that are to be mapped to the first OFDM symbol 801, which may be referred to as second frequency domain symbols, the processor 701 may determine a second frequency domain sequence including a plurality of second frequency domain symbols, wherein each second frequency domain symbol of the plurality of second frequency domain symbols at a respective subcarrier of the plurality of subcarriers includes a phase rotated version of the respective first frequency symbol at the respective subcarrier, in which the respective first frequency symbol is phase rotated based on the respective subcarrier and a cyclic prefix (CP) length. In some examples, the processor 701 may generate the second frequency domain sequence, such that the generated second frequency domain sequence includes the frequency domain symbols as described herein by applying a computation to the first frequency domain sequence based on frequency resources (i.e. subcarriers) to which the frequency resources are to be mapped and the cyclic prefix configuration in accordance with the current configuration at the RU, such as the CP length (i.e. CP duration). Through a mapping operation, the processor 701 may obtain the second frequency domain sequence based on the first frequency domain sequence, the CP length, and the subcarrier configuration.

It is to be noted that each second frequency domain symbol of the second frequency domain symbols at a respective subcarrier of the plurality of subcarriers may include a phase rotated version of the respective first frequency symbol at the respective subcarrier, in which the respective first frequency symbol is phase rotated based on the respective subcarrier and a cyclic prefix (CP) length.

For this purpose, the processor 701 may obtain the first frequency domain symbols of the first frequency domain sequence and apply a phase rotation through all subcarriers in a manner that the applied phase rotation increases linearly across the plurality of subcarriers. Accordingly, the amount of phase rotation for each respective subcarrier may increase linearly across the plurality of subcarriers. This may be referred to as, for each two consecutive subcarriers of the plurality of subcarriers, the amount of phase rotation may increase with the CP length.

In other words, the processor 701 may determine a phase shift parameter that is based on the CP length. The phase shift parameter may represent the phase shift increase at each subcarrier, which may represent the amount by which the processor 701 adjusts the phase of each subcarrier to achieve the desired effect. The processor 701 may correspondingly adjust each first frequency domain symbol corresponding to each subcarrier by applying a frequency dependent phase shift across the subcarriers. In other words, the processor 701 may adjust the phase corresponding to each first frequency domain symbol with the respective phase shift parameter to obtain the second frequency domain symbols of the second frequency domain sequence. The applied phase shift by the processor 701 to each subcarrier may be proportional to the frequency. Correspondingly, the phase shift applied by the processor 701 may increase linearly with the frequency. This may provide the second frequency domain symbols to exhibit a linear phase profile across the subcarriers.

Once the processor 701 determines the second frequency domain sequence including the second frequency domain symbols as provided in this disclosure, the processor 701 may map the second frequency domain sequence to resource elements configured for transmission of the RIM-RS 850. In particular, the processor 701 may map the second frequency domain sequence for a transmission into the first OFDM symbol 801 in corresponding frequency resources. Correspondingly, the processor 701 may cause the BBU to send information including the second frequency domain sequence to the RU, in which the second frequency domain symbols are to be transmitted within the first OFDM symbol 801. The processor 701 may further cause the BBU to send information representing resource elements (e.g. an identifier of the first OFDM symbol 801 and corresponding frequency/spatial resources) to which the second frequency domain symbols are mapped.

FIG. 9 shows an illustrative example of communication resources in time domain including multiple slots, each slot including a number of OFDM symbols. As depicted in 901, the processor 701 may map the RIM-RS within a slot. In this illustrative example, the processor 701 maps the first OFDM symbol 801 of the RIM-RS 850 as sixth OFDM symbol of slot 3 and maps the second OFDM symbol 801 of the RIM-RS 850 as seventh OFDM symbol of slot 3. In some examples, the processor 701 may map the RIM-RS at a slot boundary as depicted in 902, such that the RU may transmit the first OFDM symbol 801 of the two consecutive OFDM symbols forming the RIM-RS within a first slot (e.g. thirteenth OFDM symbol of slot 2), and the second OFDM symbol 801 of the two consecutive OFDM symbols forming the RIM-RS within a second slot following the first slot (e.g. the first OFDM symbol of slot 3).

In some examples, the processor 701 may provide the transformation from the first frequency domain sequence into the second frequency domain sequence with a phase ramp signal. The processor 701 may generate a phase ramp signal. In particular, the processor 701 may generate the phase ramp signal based on the CP length. Furthermore, the generation of the phase ramp signal may be based on the plurality of subcarriers, and particularly based on the subcarrier spacing of the subcarriers. A slope of the phase ramp signal in time domain may be based on the CP length. While the processor 701 may cause the BBU to send information representing the first frequency domain sequence to the RU, such that the first frequency domain sequence is mapped to the second OFDM symbol 802, the processor 701 may apply the phase rotation to the first frequency domain sequence using the phase ramp signal to obtain the second frequency domain sequence.

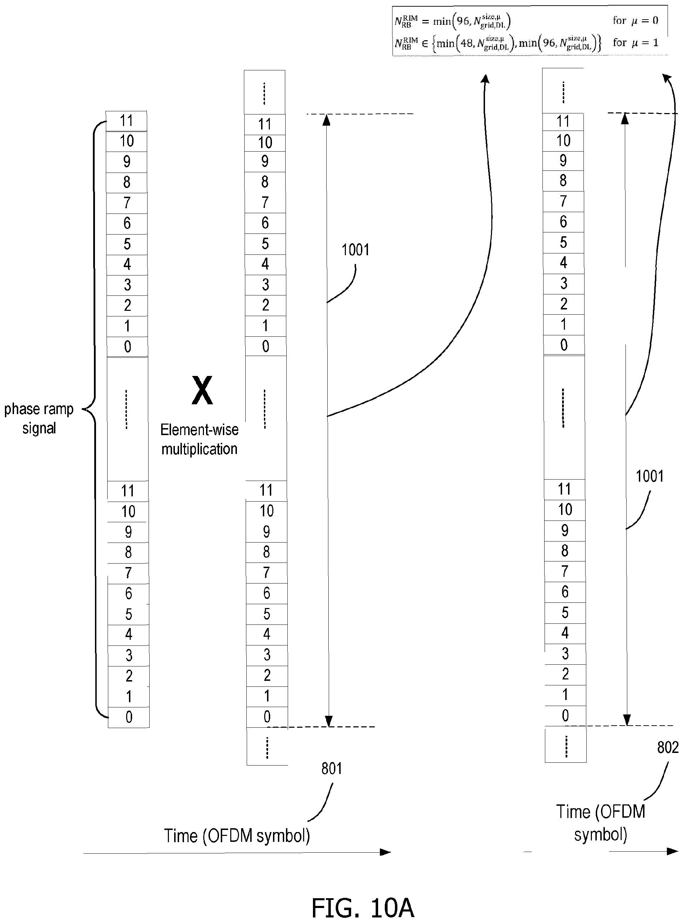

FIG. 10A shows an example illustrating an application of a phase ramp signal in accordance with various aspects described herein. In accordance with various aspects described herein, the processor 701 may generate the phase ramp signal in frequency domain. The processor 701 may accordingly multiply the frequency domain of the phase ramp signal, that is referred to as the phase ramp signal in this disclosure, with the first frequency domain sequence to obtain the second frequency domain sequence. In FIG. 10A, the processor 701 may map the first frequency domain sequence 1001 to resource elements including the second OFDM symbol 802. The number of the resource blocks of the resource elements may be given by the following:

$$N_{\text{RB}}^{\text{RIM}} = \min\left(96, N_{\text{grid,DL}}^{\text{size},\mu}\right) \qquad \text{for } \mu = 0$$

$$N_{\mathrm{RB}}^{\mathrm{RIM}} \in \left\{ \min\left( 48, N_{\mathrm{grid,DL}}^{\mathrm{size},\mu} \right), \min\left( 96, N_{\mathrm{grid,DL}}^{\mathrm{size},\mu} \right) \right\} \quad \text{for } \mu = 1$$

In order to obtain the second frequency domain sequence, which the processor 701 maps to the first OFDM symbol 801, the processor 701 may multiply the frequency domain representation of the phase ramp signal with the first frequency domain sequence. In some examples, the multiplication may be element-wise, such that each element corresponding to a particular subcarrier of the phase ramp signal is multiplied with the corresponding first frequency domain symbol in the first frequency domain sequence for that particular subcarrier.

It is to be noted that, in accordance with various aspects described herein including the differentiation of pre-processing of frequency domain sequences for a RIM-RS of a 2 OFDM symbol duration, with the presence of the differentiation, the second OFDM symbol 802 may be the same as OFDM symbols of other communication signals 800 including a cyclic prefix and a RIM-RS IDFT region that is depicted as 853. In the meantime, the IDFT region of the first OFDM symbol 801 may be considered as a cyclic shifted version of the RIM-RS IDFT region. The amount if cyclic shift is equal to the length of the cyclic prefix of the second OFDM symbol 802. Since the IDFT region of the second OFDM symbol 802 is identical to a RIM-RS IDFT region, the frequency domain symbols of the second OFDM symbol 802, where the RIM-RS is mapped, are the same as the RIM-RS sequence.

Since the IDFT region of the first OFDM symbol 801 is a cyclically shifted version of the RIM-RS IDFT region, the frequency domain symbols of the first OFDM symbol 801, where the RIM-RS is mapped, consist of the RIM-RS sequence multiplied with a phase ramp signal element-wise. The phase ramp signal may be a function of the amount of cyclic shift, which is equal to the length of the cyclic prefix of the second OFDM symbol 802.

In accordance with various aspects provided herein, the phase ramp signal may be expressed as $R(n) = \exp(-j \cdot 2\pi \cdot n \cdot SCS \cdot T_{CP,2nd}) = \exp(-j \cdot 2\pi \cdot n \cdot N_{CP,2nd}/ N_{FFT})$, wherein: n is an integer subcarrier index corresponding to the resource element where the RIM-RS symbol is mapped to; SCS is subcarrier spacing in Hz; $T_{CP,2nd}$ is time duration of CP,2nd (e.g. in seconds) (1. For both 15K and 30K SCS: if slot boundary crossed, $T_{CP,2nd}$ may be equal to the CP of the symbol 0 in a slot which has a special length. 2. For 15K SCS: if the 2nd symbol is symbol 7, $T_{CP,2nd}$ may be equal to the CP of symbol 7 which has a special length); $T_{CP,2nd}$ affects the phase ramp signal for the 1st RIM-RS symbol; $N_{CP,2nd}$ is integer number of samples in the duration of CP,2nd at the applied sampling rate; $N_{FFT}$ is integer number of samples in the duration of FFT region at the applied sampling rate.

Correspondingly, assuming that $a_{1,n}$ representing the first frequency domain sequence including a corresponding frequency domain symbol for each subcarrier index that is denoted with n, the second frequency domain sequence $a_{2,n}$ including a corresponding frequency domain symbol for the respective subcarrier index n may be represented as $a_{2,n} = R(n) \times a_{1,n}$; x representing the element-wise multiplication respective subcarrier indices.

In accordance with various aspects described herein, the RU may reset the phase for each OFDM symbols transmitted by the RU. The reset of the phase may include the following: As the RU may operate without knowledge of transmitting RIM-RS, the modulation and upconversion to the carrier frequency $f_0$ of the complex-valued OFDM baseband signal for antenna port p, subcarrier spacing configuration $\mu$, and OFDM symbol $l$ in a subframe assumed to start at $t = 0$

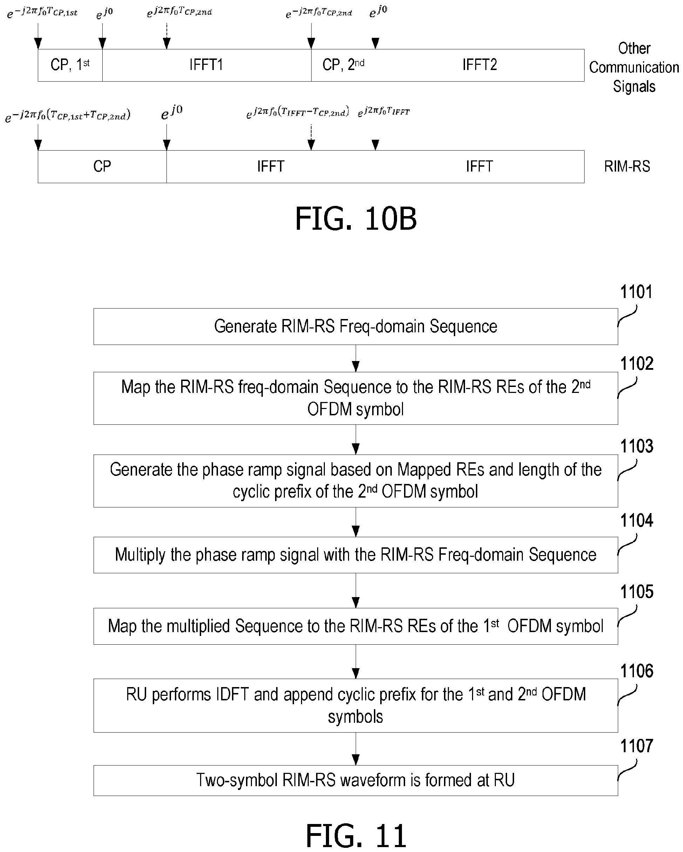

may be given by $Re \left\{ s_l^{(p,\mu)}(t) \cdot e^{j2\pi f_0 \left( t - t_{\mathrm{start},l}^{\mu} - N_{\mathrm{CP},l}^{\mu} T_c \right)} \right\}$ Such reset makes the phase at the start of the IDFT region where $t = t_{start,l}^{\mu} + N_{CP,l}^{\mu} T_c$ to be zero for regular OFDM symbols. The RIM-RS signal may span two OFDM symbols and only its phase at the start of its first IFFT portion, where $t = t_{start,l_0}^{\mu} + N_{CP,l}^{RIM} T_c$ , may be set to zero as given by $Re \left\{ s_l^{(p,\mu)}(t) e^{j2\pi f_0^{\mathrm{RIM}} \left( t - t_{\mathrm{start},l_0}^{\mu} - N_{\mathrm{CP}}^{\mathrm{RIM}} T_c \right)} \right\}$ , where $f_0^{\mathrm{RIM}}$ may be the configured reference point for RIM-RS. The phase reset during modulation and up conversion is illustrated in FIG. 10B.

In the case including the reset of the phase, the processor 701 may perform further operations on top of the operations described above to compensate the reset. For example, the processor 701 may add a further phase for each of the first OFDM symbol 801 and the second OFDM symbol 802 to ensure that the phase of the RIM-RS waveform produced at the RU remains continuous across these two consecutive OFDM symbols. The further phase may be denoted with $\varphi$ and $\phi$ as described herein for the first frequency domain sequence and the second frequency domain sequence respectively. Illustratively, the processor 701 may determine the presence of the reset based on information received from the RU. In other words, the above-mentioned phase ramp signal for the first OFDM symbol 801 may be expressed by $R(n) = \exp(-j \cdot (2\pi \cdot n \cdot SCS \cdot T_{CP,2nd} + \phi)) = \exp(-j \cdot (2\pi \cdot n \cdot N_{CP,2nd}/ N_{FFT} + \phi))$, $\phi$ being the desired phase adjustment that is equal to $\phi = 2\pi f_0 T_{CP,2nd}$. Noting that the processor 701 may apply the desired phase adjustment to the first frequency domain sequence as well (i.e. without the portion of the phase ramp signal used to obtain the second frequency domain sequence), for the second OFDM symbol, the phase compensation may be expressed by $R(n) = \exp(j \cdot \varphi)$, $\varphi$ being the desired phase adjustment that is equal to $\varphi = 2\pi f_0 T_{IFFT}$. Aspects described herein may also include the processor 701 obtaining the second frequency domain sequence based on the above-described examples without compensation and apply the phase compensation separately (e.g. before or after multiplying the first frequency domain sequence with the phase ramp signal without desired phase adjustment).

FIG. 11 shows an example of a procedure. Illustratively, the processor 701 may execute designated instructions, which may cause a processor (e.g. the processor 701 of the BBU, a processor of the RU) to perform the procedure, noting that some of the blocks may be optional. In 1101, the BBU (e.g. the O-DU) may generate a RIM-RS frequency domain sequence. In 1102, the BBU may map the RIM-RS frequency domain sequence to resource elements determined for transmission of the RIM-RS. In particular, the BBU may map the RIM-RS frequency domain sequence to the second OFDM symbol 802. In case of a phase reset as described above, the BBU may multiply the RIM-RS frequency domain sequence with a phase compensation parameter (e.g. $R(n) = \exp(j \cdot \varphi)$, $\varphi$ being the desired phase adjustment that is equal to $\varphi = 2\pi f_0 T_{IFFT}$) to obtain a phase compensated RIM-RS frequency domain sequence and map the phase compensated RIM-RS frequency domain sequence to the second OFDM symbol 802. In 1103, the BBU may generate a phase ramp signal based on the resource elements (e.g. subcarrier configuration) and the CP length of the second OFDM symbol 802. In one example with a case with the phase reset as described above, the BBU may generate the phase ramp signal, such that the phase ramp signal may include the phase compensation parameter (e.g. $\phi$ being the phase compensation parameter that may be equal to $\phi = 2\pi f_0 T_{CP,2nd}$). In 1104, the BBU may multiply the phase ramp signal with the RIM-RS frequency domain sequence to obtain a multiplied sequence. In one example with the case of the phase reset, the BBU may multiply a phase ramp signal including the phase compensation parameter with the RIM-RS frequency domain sequence to obtain the multiplied sequence. In another example, the BBU may multiply the phase ramp signal without phase compensation parameter with the phase compensated RIM-RS frequency domain sequence to obtain the multiplied sequence. In 1105, the BBU may map the multiplied sequence to the resource elements. In particular, the BBU may map the multiplied sequence to the first OFDM symbol 801. Accordingly, the BBU may send information representing the RIM-RS frequency domain sequence and the multiplied sequence to the RU for transmission of RF signals corresponding the RIM-RS frequency domain sequence and the multiplied sequence in two consecutive OFDM symbols that are the first OFDM symbol 801 and the second OFDM symbol 802.

In 1106, the RU may receive information sent by the BBU and perform 1105 lower PHY functions with the received information. The lower PHY functions may include performing IDFT on received RIM-RS frequency domain sequence and multiplied sequence. The lower PHY functions may further include appending CP for each of the first OFDM symbol 801 and the second OFDM symbol, which the appended CP may include the CP length. In case of the phase reset, the RU may also reset phases for each OFDM symbol. In 1107, the RU may form the first OFDM symbol 801 and the second OFDM symbol as consecutive OFDM symbols. The second OFDM symbol 802 may include IDFT applied RIM-RS frequency domain sequence. The second OFDM symbol 802 may follow the first OFDM symbol 801 in time domain, which the first OFDM symbol 801 may include IDFT applied multiplied sequence.

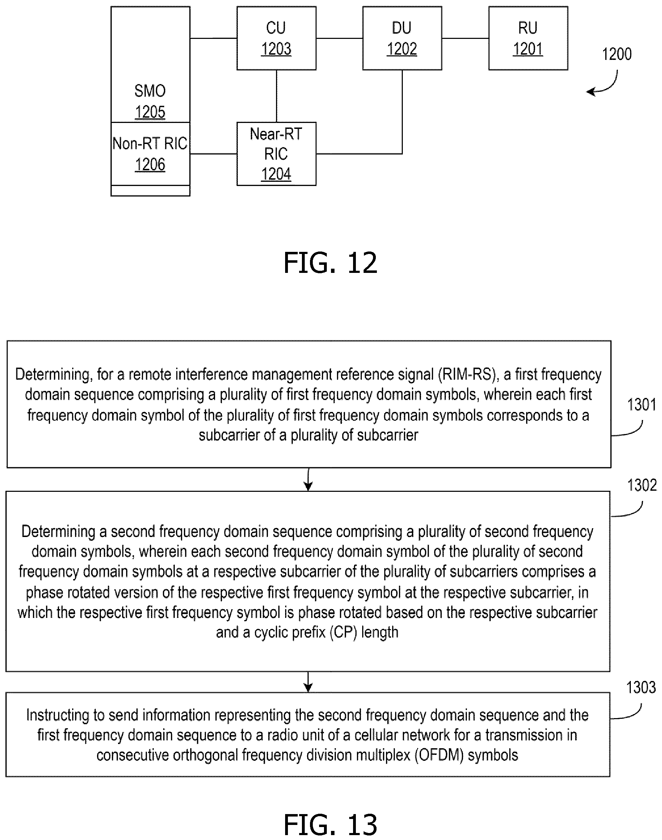

FIG. 12 shows an exemplary radio access network architecture in which the radio access network is disaggregated into multiple units. In LTE or 5G NR, network access nodes, such as a BS may implement the whole network stack including physical layer (PHY), media access control (MAC), radio link control (RLC), packet data convergence control (PDCP), and radio resource control (RRC) functions of the network stack. In a distributed approach of radio access networks, the processing of the network stack is disaggregated into at least two units (e.g. into RU, DU, and CU). Although the example illustrates a distributed structure that is based on open-RAN (O-RAN) architecture, the skilled person is able to populate the teaching provided herein in other types of distributed architectures, such as baseband unit (BBU) that may operate in the cloud and may be split to a Control Unit (CU) according to Rel. 15 of 3GPP standards.

In various deployments in recently emerged RAN architectures, such as Open Radio Access Network (O-RAN) architectures, network access nodes may have functionalities that are split among multiple units with an intention to meet the demands of increased capacity requirements by providing a flexible and interoperable approach for RANs. The exemplary RAN 1200 provided herein includes a radio unit (RU) 1201, a DU 1202, a CU 1203, a near RT-RIC 1204, and a service management and orchestration framework (SMO) 1205 including a non-RT RIC 1206. The skilled person would recognize that the illustrated structure may represent a logical architecture, in which one or more of the entities of the mobile communication network may be implemented by the same physical entity, or a distributed physical entity (a plurality of devices operating collectively) may implement one of the entities of the mobile communication network provided herein.

Illustratively, the non-RT RIC 1206 may be configured to perform a functionality within SMO that drives the content carried across the A1 interface of O-RAN architecture. It is included of the Non-RT RIC Framework and the Non-RT RIC Applications (rApps). The near RT-RIC 1204 may be an O-RAN Network Function (NF) that enables near-real-time control and optimization of RAN elements and resources via fine-grained data collection and actions over E2 interface. It may include AI/ML (Artificial Intelligence / Machine Learning) workflow including model training, inference, and updates. The CU 1203, may be an O-RAN CU disaggregated in an O-CU-CP being a logical node hosting the RRC and the control plane part of the PDCP protocol and an O-CU-UP being a logical node hosting the user plane part of the PDCP protocol and the SDAP protocol. The DU 1202 may be an O-DU as a logical node hosting RLC/MAC/High-PHY layers based on a lower layer functional split. The RU 1201 may be an O-RU being a logical node hosting Low-PHY layer and RF processing based on a lower layer functional split. This may be similar to 3GPP's "TRP" or "RRH" but more specific in including the Low-PHY layer (FFT/iFFT, PRACH extraction).

There are many approaches to provide the split among the multiple units. In this illustrative example, the CU 1203 (e.g. O-CU) may be mainly responsible for non-real time operations hosting the radio resource control (RRC), the PDCP protocol, and the service data adaptation protocol (SDAP). The DU (e.g. O-DU) 1202 may be mainly responsible for real-time operations hosting, for example, RLC layer functions, MAC layer functions, and Higher-PHY functions. RUs 1201 (e.g. O-RU) may be mainly responsible for hosting the Lower-PHY functions to transmit and receive radio communication signals to/from terminal devices (e.g. UEs) and provide data streams to the DU over a fronthaul interface (e.g. open fronthaul). The SMO 1205 may provide functions to manage domains such as RAN management, Core management, Transport management, and the non-RT RIC 1206 may provide functions to support intelligent RAN optimization via policy-based guidance, AI/ML model management, etc. The near-RT RIC 1204 may provide functions for real time optimizations, including hosting one or more xApps that may collect real-time information (per UE or per Cell) and provide services that may include AI/ML services as well.

The exemplary RAN 1200 is illustrated for the purpose of brevity. The skilled person would recognize the aspects provided herein and may also realize that the exemplary RAN 1200 may include further characterizations, such as the CU may also be -at least logically- distributed into two entities (e.g. CU-Control Plane, CU-User Plane), there may be various types of interfaces between different entities of the exemplary RAN 1200 (e.g. E2, F1, O1, X2, NG-u, etc.).

In accordance with the exemplary distributed RAN architecture, a UE may transmit radio communication signals to the RU 1201 and receive radio communication signals from the RU 1201. The processing associated with the communication is performed at the respective layers of the network stack by respective entities that are responsible to perform the corresponding function of the respective layers.

In accordance with various aspects of this disclosure, the DU 1202 and the RU 1201 may be configured as described herein, in particular DU 1202 may include the apparatus 700. In other words, the apparatus may be configured to perform operations described for a DU in this disclosure.

FIG. 13 shows an example of a method. The method may include determining 1301, for a remote interference management reference signal (RIM-RS), a first frequency domain sequence including a plurality of first frequency domain symbols, wherein each first frequency domain symbol of the plurality of first frequency domain symbols corresponds to a subcarrier of a plurality of subcarriers; determining 1302 a second frequency domain sequence including a plurality of second frequency domain symbols, wherein each second frequency domain symbol of the plurality of second frequency domain symbols at a respective subcarrier of the plurality of subcarriers includes a phase rotated version of the respective first frequency symbol at the respective subcarrier, in which the respective first frequency symbol is phase rotated based on the respective subcarrier and a cyclic prefix (CP) length; and instructing 1303 to send information representing the second frequency domain sequence and the first frequency domain sequence to a radio unit of a cellular network for a transmission in consecutive orthogonal frequency division multiplex (OFDM) symbols A non-transitory computer-readable medium may include instructions which, if executed by a processor, cause the processor to perform the method.

The following examples pertain to further aspects of this disclosure.

In example 1, the subject matter includes an apparatus including: a memory; and a processor configured to: determine, for a remote interference management reference signal (RIM-RS), a first frequency domain sequence including a plurality of first frequency domain symbols, wherein each first frequency domain symbol of the plurality of first frequency domain symbols corresponds to a subcarrier of a plurality of subcarriers; determine a second frequency domain sequence including a plurality of second frequency domain symbols, wherein each second frequency domain symbol of the plurality of second frequency domain symbols at a respective subcarrier of the plurality of subcarriers includes a phase rotated version of the respective first frequency symbol at the respective subcarrier, in which the respective first frequency symbol is phase rotated based on the respective subcarrier and a cyclic prefix (CP) length; and instruct to send information representing the second frequency domain sequence and the first frequency domain sequence to a radio unit of a cellular network for a transmission in consecutive orthogonal frequency division multiplex (OFDM) symbols.

In example 2, the subject matter of example 1, wherein an amount of phase rotation for each respective subcarrier increases linearly across the plurality of subcarriers.

In example 3, the subject matter of example 2, wherein, for each two consecutive subcarriers of the plurality of subcarriers, the amount of phase rotation increases based on the CP length.

In example 4, the subject matter of any one of examples 1 to 3, wherein the CP length is with a CP duration for the transmission of the consecutive OFDM symbols.

In example 5, the subject matter of any one of examples 1 to 4, wherein the consecutive OFDM symbols are scheduled for the transmission within a single slot.

In example 6, the subject matter of any one of examples 1 to 5, wherein the processor is further configured to: generate the first frequency domain sequence; and determine, for a transmission of the RIM-RS, resource elements including the consecutive OFDM symbols, the consecutive OFDM symbols including a first OFDM symbol followed by a second OFDM symbol that is based on the first frequency domain sequence; wherein the CP length is associated with the second OFDM symbol.

In example 7, the subject matter of example 6, wherein the first OFDM symbol is scheduled for the transmission in a first slot and the second OFDM symbol is scheduled for the transmission in a second slot following the first slot.

In example 8, the subject matter of example 6 or example 7, wherein the processor is further configured to: generate a phase ramp signal based on the CP length and the plurality of subcarriers; and multiply the phase ramp signal and the first frequency domain sequence to obtain the second frequency domain sequence.

In example 9, the subject matter of example 8, wherein the phase ramp signal is generated based on a mathematical equation of $\exp(-j \cdot 2\pi \cdot n \cdot SCS \cdot T_{CP,2nd})$, wherein n includes an integer subcarrier index for the plurality of subcarriers, each integer subcarrier index corresponding to a respective subcarrier of the plurality of subcarriers, SCS includes a subcarrier spacing of the plurality of subcarriers, and $T_{CP,2nd}$ includes a time duration of the CP length.

In example 10, the subject matter of example 8, wherein the phase ramp signal is generated based on a mathematical equation of $\exp(-j \cdot 2\pi \cdot n \cdot N_{CP,2nd}/ N_{FFT})$, wherein n includes an integer subcarrier index for the plurality of subcarriers, each integer subcarrier index corresponding to a respective subcarrier of the plurality of subcarriers, $N_{CP,2nd}$ includes an integer number of samples representing a duration of the CP length, and $N_{FFT}$ includes an integer number representing the number of the plurality of first frequency domain symbols.

In example 11, the subject matter of any one of examples 6 to 10, wherein the processor is further configured to: schedule a first transmission of the second frequency domain sequence within the first OFDM symbol; schedule a second transmission of the first frequency domain sequence within the second OFDM symbol; and encode information representative schedules of the first and the second transmissions to be sent to the radio unit.

In example 12, the subject matter of any one of examples 6 to 11, wherein the first frequency domain sequence and the second frequency domain sequence are configured such that the first OFDM symbol is a cyclically shifted version of the second OFDM symbol when a same CP length is applied to the first OFDM symbol and the second OFDM symbol at the radio unit.

In example 13, the subject matter of any one of examples 1 to 12, may further include a transmitter configured to transmit communication signals to the radio unit.

In example 14, the subject matter of any one of examples 1 to 13, wherein the cellular network includes an Open Radio Access Network (O-RAN); wherein the radio unit includes an O-RAN radio unit (O-RU) communicatively coupled with the apparatus via a fronthaul interface; and wherein the apparatus is for an O-RAN distributed unit (O-DU).

In example 15, the subject matter includes an apparatus including: a memory; and a processor configured to: generate, for a remote interference management reference signal (RIM-RS), a first frequency domain sequence; generate a phase ramp signal based on a cyclic prefix (CP) length associated with a transmission of a radio unit of a cellular network; multiply the phase ramp signal and the first frequency domain sequence to obtain a second frequency domain sequence; and map the first frequency domain sequence and the second frequency domain sequence to consecutive first and second orthogonal frequency division multiplex (OFDM) symbols.

In example 16, the subject matter of example 15, wherein the CP length is a CP duration for the transmission of the consecutive OFDM symbols.

In example 17, the subject matter of examples 15 or 16, wherein the phase ramp signal is generated based on a mathematical equation of $\exp(-j \cdot 2\pi \cdot n \cdot SCS \cdot T_{CP,2nd})$, wherein n includes an integer subcarrier index for the plurality of subcarriers, each integer subcarrier index corresponding to a respective subcarrier of the plurality of subcarriers, SCS includes a subcarrier spacing of the plurality of subcarriers, and $T_{CP,2nd}$ includes a time duration of the CP length.

In example 18, the subject matter of examples 15 or 16, wherein the phase ramp signal is generated based on a mathematical equation of $\exp(-j \cdot 2\pi \cdot n \cdot N_{CP,2nd}/ N_{FFT})$, wherein n includes an integer subcarrier index for the plurality of subcarriers, each integer subcarrier index corresponding to a respective subcarrier of the plurality of subcarriers, $N_{CP,2nd}$ includes an integer number of samples representing a duration of the CP length, and $N_{FFT}$ includes an integer number representing the number of the plurality of first frequency domain symbols.

In example 19, a non-transitory computer-readable medium including one or more instructions which, if executed by a processor, cause the processor to: determine, for a remote interference management reference signal (RIM-RS), a first frequency domain sequence including a plurality of first frequency domain symbols, wherein each first frequency domain symbol of the plurality of first frequency domain symbols corresponds to a subcarrier of a plurality of subcarriers; determine a second frequency domain sequence including a plurality of second frequency domain symbols, wherein each second frequency domain symbol of the plurality of second frequency domain symbols at a respective subcarrier of the plurality of subcarriers includes a phase rotated version of the respective first frequency symbol at the respective subcarrier, in which the respective first frequency symbol is phase rotated based on the respective subcarrier and a cyclic prefix (CP) length; and instruct to send information representing the second frequency domain sequence and the first frequency domain sequence to a radio unit of a cellular network for a transmission in consecutive orthogonal frequency division multiplex (OFDM) symbols

In example 20, the non-transitory computer-readable medium of example 19, wherein an amount of phase rotation for each respective subcarrier increases linearly across the plurality of subcarriers.

In example 21, a non-transitory computer-readable medium including one or more instructions which, if executed by a processor, cause the processor to perform any one or any combination of operations provided in this disclosure.

In example 22, a method including: determining, for a remote interference management reference signal (RIM-RS), a first frequency domain sequence including a plurality of first frequency domain symbols, wherein each first frequency domain symbol of the plurality of first frequency domain symbols corresponds to a subcarrier of a plurality of subcarriers; determining a second frequency domain sequence including a plurality of second frequency domain symbols, wherein each second frequency domain symbol of the plurality of second frequency domain symbols at a respective subcarrier of the plurality of subcarriers includes a phase rotated version of the respective first frequency symbol at the respective subcarrier, in which the respective first frequency symbol is phase rotated based on the respective subcarrier and a cyclic prefix (CP) length; and instructing to send information representing the second frequency domain sequence and the first frequency domain sequence to a radio unit of a cellular network for a transmission in consecutive orthogonal frequency division multiplex (OFDM) symbols.

In example 23, the method of example 22, wherein the method further includes any one or an combination of operations provided in this disclosure.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The terminology in accordance with open-RAN (O-RAN) specifications is to be considered for Radio Units (RUs), Distributed Units (DUs) and Centralized Units (CUs). Inherently, a base station is considered to be disaggregated into such units in accordance with layers of a corresponding protocol stack into these logical nodes, which all of them can be implemented by the same device or multiple devices in which each device may be deployed with one of these units.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electromagnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

**Claims**

1.  An apparatus comprising: a memory; and a processor configured to:

    determine, for a remote interference management reference signal, RIM-RS, a first frequency domain sequence comprising a plurality of first frequency domain symbols, wherein each first frequency domain symbol of the plurality of first frequency domain symbols corresponds to a subcarrier of a plurality of subcarriers;
    determine a second frequency domain sequence comprising a plurality of second frequency domain symbols, wherein each second frequency domain symbol of the plurality of second frequency domain symbols at a respective subcarrier of the plurality of subcarriers comprises a phase rotated version of a respective first frequency symbol at the respective subcarrier, in which the respective first frequency symbol is phase rotated based on the respective subcarrier and a cyclic prefix, CP, length; and
    instruct to send information representing the second frequency domain sequence and the first frequency domain sequence to a radio unit of a cellular network for a transmission in consecutive orthogonal frequency division multiplex, OFDM, symbols.

2.  The apparatus of claim 1, wherein an amount of phase rotation for each respective subcarrier increases linearly across the plurality of subcarriers.

3.  The apparatus of claim 2, wherein, for each two consecutive subcarriers of the plurality of subcarriers, the amount of phase rotation increases based on the CP length.

4.  The apparatus of any one of claims 1 to 3, wherein the CP length is of a CP duration for the transmission of the consecutive OFDM symbols.

5.  The apparatus of any one of claims 1 to 4, wherein the consecutive OFDM symbols are scheduled for the transmission within a single slot.

6.  The apparatus of any one of claims 1 to 5, wherein the processor is further configured to:

    generate the first frequency domain sequence; and
    determine, for a transmission of the RIM-RS, resource elements comprising the consecutive OFDM symbols, the consecutive OFDM symbols comprising a first OFDM symbol followed by a second OFDM symbol that is based on the first frequency domain sequence, wherein the CP length is associated with the second OFDM symbol.

7.  The apparatus of claim 6, wherein the first OFDM symbol is scheduled for the transmission in a first slot and the second OFDM symbol is scheduled for the transmission in a second slot following the first slot.

8.  The apparatus of any one of claim 6 or 7, wherein the processor is further configured to:

schedule a first transmission of the second frequency domain sequence within the first OFDM symbol;

schedule a second transmission of the first frequency domain sequence within the second OFDM symbol; and

encode information representative schedules of the first and the second transmissions to be sent to the radio unit.

9. The apparatus of any one of claims 6 to 8, wherein the first frequency domain sequence and the second frequency domain sequence are configured such that the first OFDM symbol is a cyclically shifted version of the second OFDM symbol when a same CP length is applied to the first OFDM symbol and the second OFDM symbol at the radio unit.

10. The apparatus of any one of claims 6 to 9, wherein the processor is further configured to:

generate a phase ramp signal based on the CP length and the plurality of subcarriers; and

multiply the phase ramp signal and the first frequency domain sequence to obtain the second frequency domain sequence.

11. The apparatus of claim 10, wherein the phase ramp signal is generated based on a mathematical equation of $\exp(-j \cdot 2\pi \cdot n \cdot SCS \cdot T_{CP,2nd})$, wherein n comprises an integer subcarrier index for the plurality of subcarriers, each integer subcarrier index corresponding to a respective subcarrier of the plurality of subcarriers, SCS comprises a subcarrier spacing of the plurality of subcarriers, and $T_{CP,2nd}$ comprises a time duration of the CP length.

12. The apparatus of any one of claims 10 or 11, wherein the phase ramp signal is generated based on a mathematical equation of $\exp(-j \cdot 2\pi \cdot n \cdot N_{CP,2nd} / N_{FFT})$, wherein n comprises an integer subcarrier index for the plurality of subcarriers, each integer subcarrier index corresponding to a respective subcarrier of the plurality of subcarriers, $N_{CP,2nd}$ comprises an integer number of samples representing a duration of the CP length, and $N_{FFT}$ comprises an integer number representing the number of the plurality of first frequency domain symbols.

13. The apparatus of any one of claims 1 to 12, wherein the processor is further configured to apply a phase compensation to compensate a phase reset at the radio unit.

14. The apparatus of any one of claims 1 to 13, wherein the cellular network comprises an Open Radio Access Network, O-RAN;

wherein the radio unit comprises an O-RAN radio unit (O-RU) communicatively coupled with the apparatus via a fronthaul interface; and

wherein the apparatus is for an O-RAN distributed unit (O-DU).

15. A non-transitory computer-readable medium comprising one or more instructions which, if executed by a processor, cause the processor to:

determine, for a remote interference management reference signal (RIM-RS), a first frequency domain sequence comprising a plurality of first frequency domain symbols, wherein each first frequency domain symbol of the plurality of first frequency domain symbols corresponds to a subcarrier of a plurality of subcarriers;

determine a second frequency domain sequence comprising a plurality of second frequency domain symbols, wherein each second frequency domain symbol of the plurality of second frequency domain symbols at a respective subcarrier of the plurality of subcarriers comprises a phase rotated version of a respective first frequency symbol at the respective subcarrier, in which the respective first frequency symbol is phase rotated based on the respective subcarrier and a cyclic prefix (CP) length; and

instruct to send information representing the second frequency domain sequence and the first frequency domain sequence to a radio unit of a cellular network for a transmission in consecutive orthogonal frequency division multiplex (OFDM) symbols;

preferably wherein an amount of phase rotation for each respective subcarrier increases linearly across the plurality of subcarriers.

FIG. 1

FIG. 2

FIG. 3

FIG. 4

450

401

402

**BASEBAND PROCESSING ENTITY (O-DU)**

| RLC |

| MAC |

**HIGH- PHY**

| CHANNEL DECODING |

| DE/MODULATION |

| LAYER MAPPING |

| PRECODING |

| DE/MAPPING |

F
R
O
N
T
H
A
U
L

**RADIO UNIT (O-RU)**

**LOW- PHY**

| IQ DECOMPRESSION |

| PRECODING |

| DIGITAL BEAMFORMING |

| FFT / IFFT / CP |

| DIGITAL ANALOG CONVERSION |

| ANALOG BEAMFORMING |

| RF |

FIG. 5

FIG. 6

FIG. 7

801 802

800

811 812 821 822

Other
Communication
Signals

| CP,1$^{st}$ | IFFT1 | CP,2$_{nd}$ | IFFT2 |

851 852 853

850

| CP | IFFT | IFFT |

RIM-RS

852b 852a

## FIG. 8

1$^{st}$ Ref
point

UL
reception
boundary

| slot 2 | slot 3 |

Previous
Slots

| S 0 0 | S 0 1 | S 0 2 | S 0 3 | S 0 4 | S 0 5 | S 0 6 | S 0 7 | S 0 8 | S 0 9 | S 1 0 | S 1 1 | S 1 2 | S 1 3 | S 0 0 | S 0 1 | S 0 2 | S 0 3 | S 0 4 | S 0 5 | ■ 6 | ■ 7 | S 0 8 | S 0 9 | S 1 0 | S 1 1 | S 1 2 | S 1 3 |

Next
Slots

901

1$^{st}$ Ref
point

UL
reception
boundary

| slot 2 | slot 3 |

902

Previous
Slots

| S 0 0 | S 0 1 | S 0 2 | S 0 3 | S 0 4 | S 0 5 | S 0 6 | S 0 7 | S 0 8 | S 0 9 | S 1 0 | S 1 1 | S 1 2 | ■ 3 | S 0 0 | S 0 1 | S 0 2 | S 0 3 | S 0 4 | S 0 5 | S 0 6 | S 0 7 | S 0 8 | S 0 9 | S 1 0 | S 1 1 | S 1 2 | S 1 3 |

Next
Slots

## FIG. 9

$$N_{RB}^{RIM} = \min\left(96, N_{grid,DL}^{size,\mu}\right) \qquad \text{for } \mu = 0$$

$$N_{RB}^{RIM} \in \left\{\min\left(48, N_{grid,DL}^{size,\mu}\right), \min\left(96, N_{grid,DL}^{size,\mu}\right)\right\} \quad \text{for } \mu = 1$$

FIG. 10A

$e^{-j2\pi f_0 T_{CP,1st}}$  $e^{j0}$  $e^{j2\pi f_0 T_{CP,2nd}}$  $e^{-j2\pi f_0 T_{CP,2nd}}$  $e^{j0}$

| CP, 1st | IFFT1 | CP, 2nd | IFFT2 | Other Communication Signals |

$e^{-j2\pi f_0(T_{CP,1st}+T_{CP,2nd})}$  $e^{j0}$  $e^{j2\pi f_0(T_{IFFT}-T_{CP,2nd})}$  $e^{j2\pi f_0 T_{IFFT}}$

| CP | IFFT | IFFT | RIM-RS |

## FIG. 10B

1101 Generate RIM-RS Freq-domain Sequence

1102 Map the RIM-RS freq-domain Sequence to the RIM-RS REs of the 2nd OFDM symbol

1103 Generate the phase ramp signal based on Mapped REs and length of the cyclic prefix of the 2nd OFDM symbol

1104 Multiply the phase ramp signal with the RIM-RS Freq-domain Sequence

1105 Map the multiplied Sequence to the RIM-RS REs of the 1st OFDM symbol

1106 RU performs IDFT and append cyclic prefix for the 1st and 2nd OFDM symbols

1107 Two-symbol RIM-RS waveform is formed at RU

## FIG. 11

FIG. 12

FIG. 13

## EUROPEAN SEARCH REPORT

**Application Number**

EP 25 16 8029

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI ET AL: "On RIM RS generation, transmission occasion and circularity characteristic", 3GPP DRAFT; R1-1814268 ON RIM RS GENERATION, TRANSMISSION OCCASION AND CIRCULARITY CHARACTERISTIC, 3RD GENERATION PARTNERSHIP PROJECT (3GPP), MOBILE COMPETENCE CENTRE ; 650, ROUTE DES LUCIOLES ; F-069 ʹ vol. RAN WG1, no. Spokane, the USA; 20181112 - 20181116 19 November 2018 (2018-11-19), XP051494720, Retrieved from the Internet: URL:http://www.3gpp.org/ftp/tsg%5Fran/WG1%5FRL1/TSGR1%5F95/Docs/R1%2D1814268%2Ezip [retrieved on 2018-11-19] * the whole document * | 1-15 | INV. H04L27/26 H04J11/00 H04L5/00 |
| | ----- | | |
| X | WO 2024/014732 A1 (SAMSUNG ELECTRONICS CO LTD [KR]) 18 January 2024 (2024-01-18) * paragraphs [0013], [0094], [0095] * * figures 3B, 9A, 11, 14-16 * -& EP 4 539 411 A1 (SAMSUNG ELECTRONICS CO LTD [KR]) 16 April 2025 (2025-04-16) | 1-15 | **TECHNICAL FIELDS SEARCHED (IPC)** H04J H04L |
| | ----- | | |

The present search report has been drawn up for all claims

| Place of search | Date of completion of the search | Examiner |
|---|---|---|
| Berlin | 3 September 2025 | Feng, Mei |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 16 8029

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2025

| Patent document cited in search report | | Publication date | Patent family member(s) | | Publication date |
|---|---|---|---|---|---|
| WO 2024014732 | A1 | 18-01-2024 | CN | 119856471 A | 18-04-2025 |
| | | | EP | 4539411 A1 | 16-04-2025 |
| | | | US | 2025150318 A1 | 08-05-2025 |
| | | | WO | 2024014732 A1 | 18-01-2024 |
| EP 4539411 | A1 | 16-04-2025 | CN | 119856471 A | 18-04-2025 |
| | | | EP | 4539411 A1 | 16-04-2025 |
| | | | US | 2025150318 A1 | 08-05-2025 |
| | | | WO | 2024014732 A1 | 18-01-2024 |

EPO FORM P0459

For more details about this annex : see Official Journal of the European Patent Office, No. 12/82